(19) Europäisches Patentamt / European Patent Office / Office européen des brevets

(11) **EP 2 806 243 A1**

(12) **EUROPEAN PATENT APPLICATION**
published in accordance with Art. 153(4) EPC

(43) Date of publication:
**26.11.2014 Bulletin 2014/48**

(21) Application number: **13738551.4**

(22) Date of filing: **08.01.2013**

(51) Int Cl.:
*F28F 1/32* (2006.01)   *B60H 1/32* (2006.01)
*B61D 27/00* (2006.01)

(86) International application number:
**PCT/JP2013/050061**

(87) International publication number:
**WO 2013/108648 (25.07.2013 Gazette 2013/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2012 JP 2012007607**

(71) Applicant: **Mitsubishi Electric Corporation
Tokyo 100-8310 (JP)**

(72) Inventor: **UTO, Taichi
Chiyoda-ku
Tokyo 100-8310 (JP)**

(74) Representative: **Sajda, Wolf E. et al
Meissner, Bolte & Partner GbR
Postfach 86 06 24
81633 München (DE)**

(54) **HEAT EXCHANGER FOR VEHICLE AIR CONDITIONING DEVICE, AND VEHICLE AIR CONDITIONING DEVICE**

(57) A heat exchanger for a vehicle air-conditioner includes a plurality of fins (1) arranged parallel to one another and a plurality of heat transfer tubes extending parallel to one another through the fins (1). The heat transfer tubes are arranged on the surface of each fin (1) in a staggered pattern. The fins (1) are pieces cut by a corrugated cutter (9) from a band material (2) having through-holes (3) through which the heat transfer tubes are to extend. A row pitch Dp of the heat transfer tubes is expressed as

$$"Dp = C + D + 2W + 2\delta \text{ for } 0 < \delta < D + W"$$

where C is the thickness of the cutter (9), D is the outside diameter of the heat transfer tube, W is the width of a fin collar flange (5) projecting outwards from the tip of a fin collar (4) extending from the edge of each of the through-holes (3) to one side of each of the fins (1), and δ is the clearance between the cutter (9) and the fin collar flange (5).

FIG. 2

**Description**

Technical Field

The present invention relates to a heat exchanger for a vehicle air-conditioner and a vehicle air-conditioner.

Background Art

Conventional vehicle air-conditioners are of various mounted types, such as a roof type, a floor type, and a split type. A vehicle air-conditioner includes an outdoor unit that includes an outdoor heat exchanger, an outdoor fan, and a compressor, and an indoor unit that includes an indoor heat exchanger and an indoor fan.

In the outdoor unit, the outdoor heat exchanger is cooled using outdoor air sucked by the outdoor fan and the outdoor air subjected to heat exchange is discharged to the outside of the outdoor unit. In the indoor unit, the indoor fan is driven, the air inside a vehicle (indoor air) and the air outside the vehicle (outdoor air) are subjected to heat exchange by the indoor heat exchanger, and the resultant air subjected to heat exchange is discharged into a compartment. These components are sequentially connected by pipes to circulate a refrigerant through the components, thus forming a refrigeration cycle.

The indoor heat exchanger and the outdoor heat exchanger (each or one of which will be referred to as the "heat exchanger" hereinafter) of the vehicle air-conditioner have a core length (corresponding to the length of a heat transfer tube) larger than those of a room air-conditioner and a packaged air-conditioner in view of restrictions on the shapes and capacities of the indoor unit and the outdoor unit (each or one of which will be referred to as the "unit" hereinafter). Accordingly, each heat exchanger tends to bend under its own weight. This makes it necessary to increase the rigidity of the heat exchanger.

The pitch (row pitch) of heat transfer tubes in the longitudinal direction and the pitch (column pitch) of heat transfer tubes in the lateral direction of columns are reduced to increase the number of heat transfer tubes, so that the rigidity of the heat exchanger can be increased.

When the number of heat transfer tubes is increased by reducing the row pitch and the column pitch, the area of passage of air through the heat exchanger is reduced. Unfortunately, this results in an increase in pressure loss of the heat exchanger, thus reducing the capacity of the air-conditioner.

A heat exchanger has been disclosed in which a "row pitch", a "column pitch", a "fin pitch", and the like are defined with reference to the outside diameter of a heat transfer tube, which has a large amount of heat exchanged, and is excellent in heat transfer characteristic (see, for example, Patent Literature 1).

Citation List

Patent Literature

Patent Literature 1: Japanese Unexamined Patent Application Publication JP-A-2000-274 982 (pp. 4-5, Fig. 7)

Summary of the Invention

Technical Problem

Although the heat exchanger disclosed in Patent Literature 1 has a large amount of heat exchanged and is excellent in heat transfer characteristic, it requires a given size because fins are formed by rectangular plates. Specifically, each fin is formed into a rectangular shape by cutting a band material having through-holes, which are formed in advance and through which the heat transfer tubes are to extend, with a linear cutter.

The fin includes cylindrical fin collars each extending from the edge of the through-hole to one side of the fin and each fin collar includes a fin collar flange projecting outwards from the tip of the fin collar. For cutting into fins having linear edges, therefore, it is necessary to set both a given distance (the sum of the thickness of the cutter and a given clearance) across which the cutter passes and a given distance (given row pitch) between adjacent heat transfer tubes so that the cutter avoids the fin collar flanges.

In other words, the row pitch (Dp) of the heat transfer tubes has to satisfy "$Dp > C + 2D + 4W$ (which will be described in detail later)" where D is the outside diameter of the heat transfer tube and W is the width of the fin collar flange.

To downsize the heat exchanger, therefore, a further reduction in row pitch has been required.

The present invention has been made to meet the above-described requirement and has as its object to provide a downsized heat exchanger for a vehicle air-conditioner and a vehicle air-conditioner including the heat exchanger.

Solution to the Problem

The present invention provides a heat exchanger for a vehicle air-conditioner, the heat exchanger including a plurality of fins arranged parallel to one another and a plurality of heat transfer tubes extending parallel to one another through the fins, the heat transfer tubes being arranged on the surface of each fin in a staggered pattern. The fins are pieces cut by a cutter from a band material having through-holes through which the heat transfer tubes are to extend. A row pitch Dp of the heat transfer tubes is expressed as

$$\text{"Dp} = C + D + 2W + 2\delta \text{ for } 0 < \delta < D + W\text{"}$$

where C is the thickness of the cutter, D is the outside diameter of the heat transfer tube, W is the width of a fin collar flange projecting outwards from the tip of a fin collar extending from the edge of each of the through-holes to one side of each of the fins, and $\delta$ is the clearance between the cutter and the fin collar flange.

Advantageous Effects of the Invention

According to the present invention, since the row pitch Dp in a heat exchanger for a vehicle air-conditioner is reduced to "C + 2D + 2W + 2δ", the heat exchanger can be downsized while an increase in height of the heat exchanger is suppressed.

Brief Description of the Drawings

FIG. 1      is a front view illustrating a fin of a heat exchanger for a vehicle air-conditioner according to Embodiment 1 of the present invention.
FIG. 2      is a side view illustrating the fin of the heat exchanger according to Embodiment 1 of the present invention.
FIG. 3A    is a front view illustrating a conventional fin for comparison.
FIG. 3B    is a side view illustrating the conventional fin for comparison.
FIG. 4      is a correlation diagram illustrating the relationship between the diameter of a heat transfer tube and the moment of inertia of the cross-sectional area.
FIG. 5      is a plan view for explaining a vehicle air-conditioner according to Embodiment 2 of the present invention.
FIG. 6      is a front view for explaining the vehicle air-conditioner according to Embodiment 2 of the present invention.

Description of Embodiments

Embodiment 1: Heat Exchanger

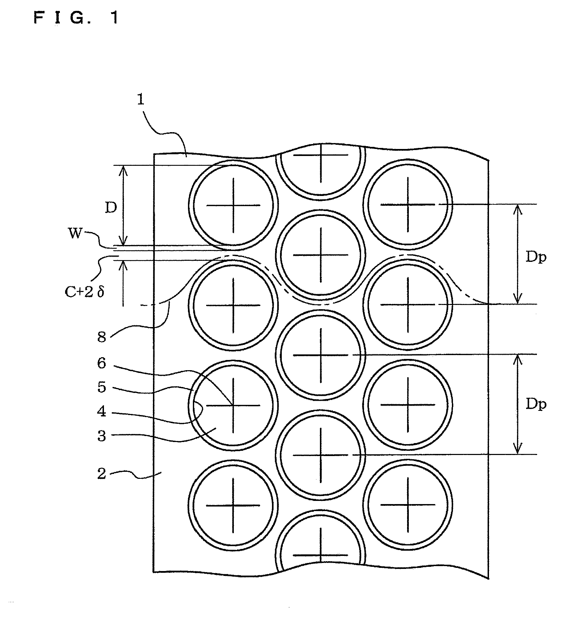

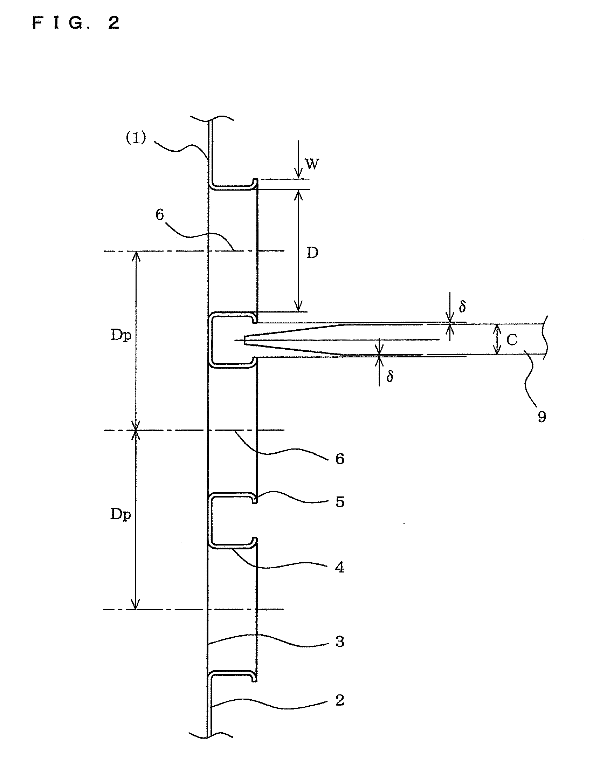

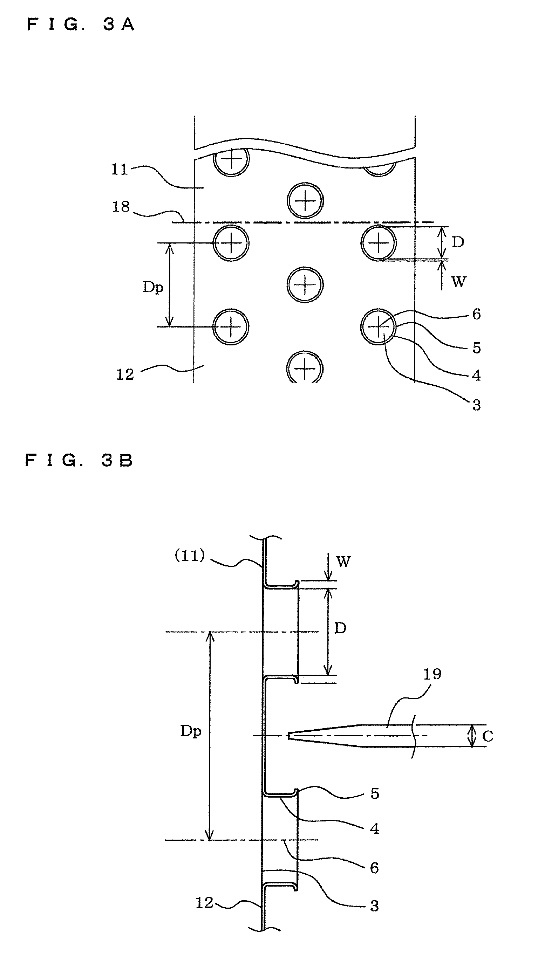

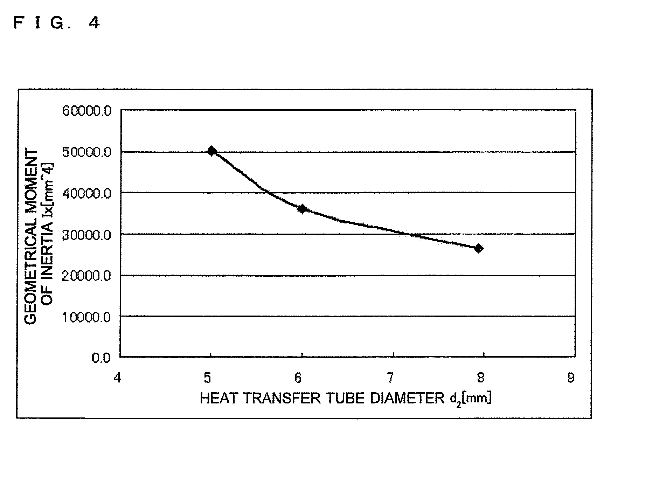

FIGs. 1 to 4 are diagrams for explaining a heat exchanger for a vehicle air-conditioner according to Embodiment 1 of the present invention. FIG. 1 is a front view illustrating a fin, FIG. 2 is a side view illustrating the fin, FIG. 3A is a front view illustrating a conventional fin for comparison, FIG. 3B is a side view illustrating the conventional fin for comparison, and FIG. 4 is a correlation diagram illustrating the relationship between the diameter of a heat transfer tube and the moment of inertia of the cross-sectional area. The figures are schematically drawn and the present invention is not limited to any illustrated example.
As illustrated in FIGs. 1 and 2, the heat exchanger for a vehicle air-conditioner (not illustrated; to be referred to as the "heat exchanger" hereinafter) includes a plurality of fins 1 arranged parallel to one another and a plurality of heat transfer tubes (not illustrated) extending parallel to one another through the fins 1. The heat transfer tubes are arranged on the surface of each fin 1 in a staggered pattern.
The fins 1 are pieces cut from a band material 2 having a given width. The band material 2 has through-holes 3 which are formed in a staggered pattern and through which the heat transfer tubes (not illustrated) are to extend.
Each fin 1 includes cylindrical fin collars 4 each defining the inner surface of a corresponding through-hole 3 and each extending from the edge of the corresponding through-hole 3 to one side of the fin 1. Each fin collar 4 includes a fin collar flange 5 projecting outwards from the tip of the fin collar 4. The fin collar 4 is used to hold the posture of the heat transfer tube and guarantee heat transfer to and from the heat transfer tube. The fin collar 4 has a diameter equal to the inside diameter of the through-hole, or the outside diameter of the heat transfer tube.
A corrugated cutter 9 cuts the band material 2 into pieces, each serving as the fin 1, so as not to interfere with the fin collar flanges 5 (a cut line 8 along which the band material 2 is cut so as to define an edge is indicated by an alternate long and short dashed line in FIG. 1).

In this case, a "row pitch Dp", serving as the distance between centers 6 of the through-holes 3 in the longitudinal direction (the vertical direction in FIG. 1) of the fin 1 is expressed as "Dp = C + D + 2W + 2δ" where C is the thickness of the cutter 9, D is the inside diameter of the through-hole 3 (equal to the outside diameter of the heat transfer tube (not illustrated)), W is the width of the fin collar flange 5 projecting outwards from the tip of the fin collar extending from the edge of the through-hole to one side of the fin, and δ is the clearance between the cutter 9 and the fin collar flange 5 and satisfies "0 < δ < D + W". The clearance δ to be appropriately set is determined by the process capacity of a device that drives the cutter 9.

FIGs. 3A and 3B are diagrams for explaining a conventional fin 11 for comparison and illustrate the row pitch Dp for cutting with a linear cutter 19. In FIGs. 3A and 3B, the fin 11 is a piece cut from a band material 12 having a given width. The band material 12 has through-holes 3 formed in a staggered pattern (see FIG. 1).

In this case, the band material 12 is cut at a linear cut line 18 into the fins 11. The row pitch Dp is expressed as "Dp > C + 2D + 4W".

Specifically, the fin 1 in the present invention is obtained by cutting at the wavy cut line 8 defined by the corrugated cutter 9 and the row pitch Dp is expressed as "Dp = C + D + 2W + 2δ". On the other hand, the row pitch Dp in the conventional fin 11 obtained by cutting at the linear cut line 18 defined by the linear cutter 19 is expressed as "Dp > C + 2D + 4W". Accordingly, the row pitch Dp in the fin 1 in the present invention is less than that in the conventional fin 11.

Consequently, the heat exchanger including the fins 1 can be downsized.

Although the aforementioned configuration uses the corrugated cutter 9, the present invention is not limited to this example. The cutter 9 may have any meandering shape, for example, a saw-toothed (angular) shape or a rack shape (in the form of successive trapezoids) so as not to interfere with the fin collar flanges 5.

Furthermore, when the distance between the centers 6 of the through-holes 3 is set equal to the row pitch Dp in consideration of the relationship of adjacent through-holes 3 aligned in the widthwise direction (or oblique lateral directions in FIG. 1) of the fin 1 (i.e., the centers 6 of three adjacent through-holes 3 define the vertices of a regular triangle), a U-bend (U-tube) communicating between the ends of the heat transfer tubes arranged in the longitudinal direction (vertical direction) can be allowed to have the same shape as that of a U-bend (U-tube) communicating between the ends of the heat transfer tubes arranged in the widthwise direction (oblique lateral direction).

As described above, if the row pitch Dp is reduced without changing the diameter of the heat transfer tube (the inside diameter D of the through-hole), the transverse area of passage of air through the heat exchanger would be reduced to increase pressure loss, thus leading to a reduction in capacity of the vehicle air-conditioner.

Table 1 and FIG. 4 illustrate examples of the moment of inertia of the cross-sectional area of the heat exchanger calculated in consideration of pressure loss using Equation (1) provided that air passages through the heat exchanger have the same transverse area.

Reducing the diameter of each heat transfer tube and the row pitch can increase the rigidity of the heat exchanger and suppress an increase in pressure loss. Values in Table 1 are merely illustrative and the present invention is not limited to any specific value.

Table 1

| | | | | |
|---|---|---|---|---|
| Diameter of Heat Transfer Tube | $d_2$ [mm] | 5 | 6 | 7.94 |
| Column Pitch | Lp [mm] | 11.0 | 13.0 | 17.7 |
| Number of Columns | | 5 | 4 | 3 |
| Length of Column | L [mm] | 55.0 | 52.0 | 53.0 |
| Row Pitch | Dp [mm] | 12.7 | 15.0 | 20.4 |
| Number of Rows | | 13 | 11 | 8 |
| Length of Row | D [mm] | 165.1 | 165.0 | 163.2 |
| Moment of Inertia of Cross-sectional Area | Ix [mm^4] | 50299.1 | 36210.9 | 26362.6 |
| Transverse Area of Air Passage of Heat Exchanger | A [mm^2] | 100.1 | 99.0 | 99.7 |

[Math. 1]

$$Ix = \frac{\pi}{64}\left(d_2{}^4 - d_1{}^4\right) \times \text{ the number of rows } + \frac{\pi n}{4}\left(d_2{}^2 - d_1{}^2\right)\sum_{i=1}^{n} Yi{}^2 \qquad \ldots(1).$$

where

Ix     is the moment of inertia of the cross-sectional area,

$d_2$    is the outside diameter of the heat transfer tube,
$d_1$    is the inside diameter of the heat transfer tube, and
Yi     is the distance from the middle of the bend of the heat exchanger to the heat transfer tube.

Embodiment 2: Vehicle Air-conditioner

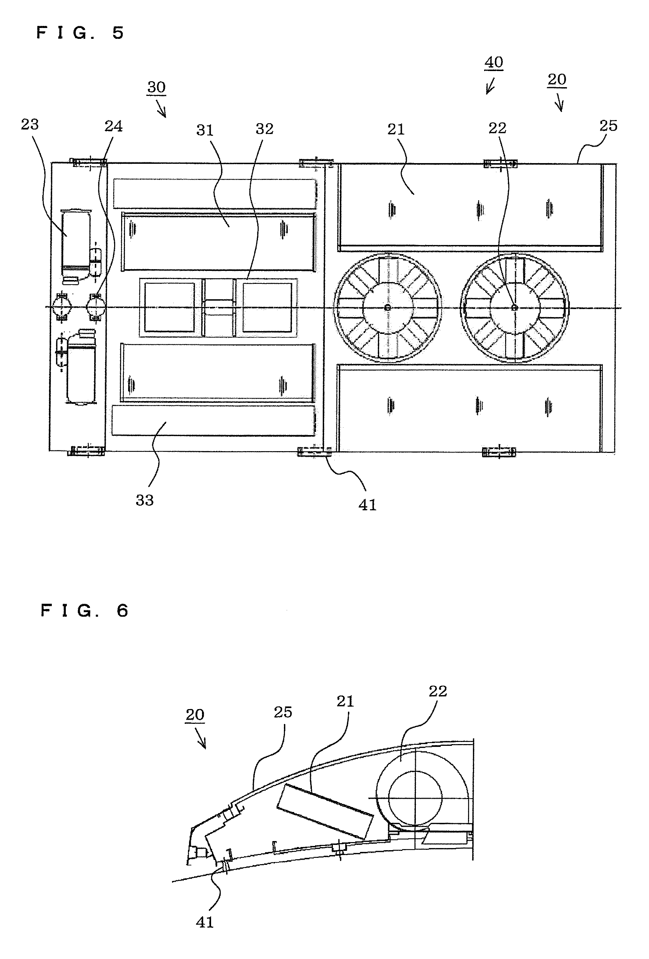

FIGs. 5 and 6 are diagrams for explaining a vehicle air-conditioner according to Embodiment 2 of the present invention. FIGs. 5 and 6 are a plan view and a front view, respectively, of the vehicle air-conditioner. The figures are schematically drawn and the present invention is not limited to any illustrated example.

In FIGs. 5 and 6, a vehicle air-conditioner 40 includes an outdoor unit 20 that includes outdoor heat exchangers 21, outdoor fans 22, compressors 23, and gas-liquid separators 24, and an indoor unit 30 that includes indoor heat exchangers 31 and indoor fans 32. The vehicle air-conditioner 40 is installed on a vehicle (not illustrated) by mounting legs 41.

In the outdoor unit 20, the outdoor heat exchangers 21 are accommodated in a housing 25. Outdoor air sucked by the outdoor fans 22 is subjected to heat exchange by the outdoor heat exchangers. The resultant outdoor air subjected to heat exchange is discharged to the outside of the outdoor unit 20. In the indoor unit 30, the indoor fans 32 are driven to suck the indoor air and the outdoor air through return ports 33, the air is subjected to heat exchange by the indoor heat exchangers 31, and the resultant air subjected to heat exchange is discharged into a compartment. These components are connected by refrigerant pipes (not illustrated) to circulate a refrigerant through the components, thus forming a refrigeration cycle.

Each of the outdoor heat exchangers 21 and the indoor heat exchangers 31 is the heat exchanger according to the present invention (see Embodiment 1). Specifically, the use of the fins 1 downsizes the outdoor heat exchangers 21 and the indoor heat exchangers 31. Accordingly, the vehicle air-conditioner 40 is small.

List of Reference Signs

| | |
|---|---|
| 1 | fin |
| 2 | band material |
| 3 | through-hole |
| 4 | fin collar |
| 5 | fin collar flange |
| 6 | center |
| 8 | cut line |
| 9 | cutter |
| 11 | fin |
| 12 | band material |
| 18 | cut line |
| 19 | cutter |
| 20 | outdoor unit |
| 21 | outdoor heat exchanger |
| 22 | outdoor fan |
| 23 | compressor |
| 24 | gas-liquid separator |
| 25 | housing |
| 30 | indoor unit |
| 31 | indoor heat exchanger |
| 32 | indoor fan |

33     return port
40     vehicle air-conditioner
41     mounting leg
$\delta$     clearance
C     cutter thickness
D     through-hole inside diameter
Dp     row pitch
W     fin-collar-flange width

**Claims**

1.   A heat exchanger for a vehicle air-conditioner, the heat exchanger comprising:

    - a plurality of fins arranged parallel to one another; and
    - a plurality of heat transfer tubes extending parallel to one another through the fins, the heat transfer tubes being arranged on a surface of each fin in a staggered pattern,
    - wherein the fins are pieces cut by a cutter from a band material having through-holes through which the heat transfer tubes are to extend, and
    - wherein a row pitch Dp of the heat transfer tubes is expressed as

$$Dp = C + D + 2W + 2\delta$$

    for $0 < \delta < D + W$
    - where C is a thickness of the cutter, D is an outside diameter of the heat transfer tube, W is a width of a fin collar flange projecting outwards from a tip of a fin collar extending from an edge of each of the through-holes to one side of each of the fins, and $\delta$ is a clearance between the cutter and the fin collar flange.

2.   The heat exchanger of claim 1,
    wherein each of the fins has a wavy cut edge or an angular cut edge.

3.   The heat exchanger of claim 1 or 2,
    wherein each heat transfer tube has an outside diameter of 5 to 8 mm.

4.   A vehicle air-conditioner comprising:

    - an outdoor unit that includes an outdoor heat exchanger, a compressor, a gas-liquid separator, and an outdoor fan, the outdoor heat exchanger, the compressor, the gas-liquid separator, and the outdoor fan providing part of a refrigeration cycle; and
    - an indoor unit that includes an indoor heat exchanger and an indoor fan, the indoor heat exchanger and the indoor fan providing another part of the refrigeration cycle,
    - wherein each of the outdoor heat exchanger and the indoor heat exchanger includes the heat exchanger of any one of claims 1 to 3.

F I G.  1

FIG. 2

FIG. 3A

FIG. 3B

F I G . 4

FIG. 5

FIG. 6

<div align="center">

**INTERNATIONAL SEARCH REPORT**
</div>

| | International application No. |
|---|---|
| | PCT/JP2013/050061 |

**A. CLASSIFICATION OF SUBJECT MATTER**
*F28F1/32*(2006.01)i, *B60H1/32*(2006.01)i, *B61D27/00*(2006.01)i

According to International Patent Classification (IPC) or to both national classification and IPC

**B. FIELDS SEARCHED**

Minimum documentation searched (classification system followed by classification symbols)
F28F1/32, B60H1/32, B61D27/00

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Microfilm of the specification and drawings annexed to the request of Japanese Utility Model Application No. 083490/1974(Laid-open No. 12063/1976) (Suction Gas Engine Mfg. Co., Ltd.), 29 January 1976 (29.01.1976), specification, page 1, line 17 to page 5, line 7; fig. 1, 3 (Family: none) | 1-4 |
| Y | JP 2005-7467 A (Hidaka Engineering Co., Ltd.), 13 January 2005 (13.01.2005), paragraph [0012]; fig. 1 & CN 1572388 A & KR 10-2005-0000311 A | 1-4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 April, 2013 (08.04.13) | 16 April, 2013 (16.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/050061

C (Continuation). DOCUMENTS CONSIDERED TO BE RELEVANT

| Category* | Citation of document, with indication, where appropriate, of the relevant passages | Relevant to claim No. |
|---|---|---|
| A | WO 2010/095419 A1 (Mitsubishi Heavy Industries, Ltd.), 26 August 2010 (26.08.2010), paragraphs [0017] to [0025]; fig. 4 & US 2011/0277960 A1 & EP 2400251 A1 & CN 102203538 A & KR 10-2011-0060957 A | 1-4 |
| A | Microfilm of the specification and drawings annexed to the request of Japanese Utility Model Application No. 170509/1986(Laid-open No. 74983/1988) (Mitsubishi Electric Corp.), 18 May 1988 (18.05.1988), specification, page 3, lines 10 to 18; fig. 1, 2 (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000274982 A